# EUROPEAN PATENT SPECIFICATION

(11) **EP 1 696 760 B1**
(45) Date of publication and mention of the grant of the patent: **30.09.2009**
(21) Application number: 04796631.2
(22) Date of filing: 28.10.2004
(51) Int. Cl.: A44B 18/00

(54) **SPLIT HOOK FASTENER**
SPALTHAKENBEFESTIGUNGSELEMENT
FERMETURE A AGRAFES FENDU

(30) Priority: 23.12.2003 US 745002
(43) Date of publication of application: 06.09.2006
(73) Proprietor: 3M Innovative Properties Company, St. Paul MN 55133-3427 (US)
(72) Inventor: SETH, Jayshree, Saint Paul, MN 55133-3427 (US); AUSEN, Ronald W., Saint Paul, MN 55133-3427 (US); VENNE, Janet A., Saint Paul, MN 55133-3427 (US)
(74) Representative: Vossius & Partner
(86) International application number: PCT/US2004/035788
(87) International publication number: WO 2005/067756

(56) References cited:
- EP-A1- 0 324 577
- EP-A1- 0 793 923
- US-A- 3 266 113
- US-A- 3 708 833
- US-A- 3 718 725
- US-A- 4 001 366
- US-A- 5 875 527
- US-A- 6 000 106

## Description

### Background and Summary

The present invention concerns hook fasteners.

### Background of the Invention

There are a variety of methods known to form hook materials for hook and loop fasteners. One of the first manufacturing methods for forming hooks involved weaving loops of monofilaments into a fibrous or film backing or the like followed by cutting the filament loops to form hooks. These monofilament loops were also heated to form headed structures such as disclosed in U.S. Patent Nos. 4,290,174; 3,138,841 or 4,454,183. These woven hooks are generally durable and work well for repeated uses. However, they are generally expensive and coarse to the touch.

For use in disposable garments, diapers and the like, it was generally desirable to provide hooks that were inexpensive and less abrasive. For these uses and the like, the solution was generally the use of continuous extrusion methods that simultaneously formed the backing and the hook elements, or precursors to the hook elements. With direct extrusion molding formation of the hook elements, see for example U.S. Patent No. 5,315,740, the hook elements must continuously taper from the backing to the hook tip to allow the hook elements to be pulled from the molding surface. This generally inherently limits the individual hooks to those capable of engaging only in a single direction while also limiting the strength of the engaging head portion of the hook element

An alternative direct molding process is proposed, for example, in U.S. Patent No. 4,894,060, which permits the formation of hook elements without these limitations. Instead of the hook elements being formed as a negative of a cavity on a molding surface, the basic hook cross-section is formed by a profiled extrusion die. The die simultaneously extrudes the film backing and rib structures. The individual hook elements are then formed from the ribs by cutting the ribs transversely followed by stretching the extruded strip in the direction of the ribs. The backing elongates but the cut rib sections remain substantially unchanged. This causes the individual cut sections of the ribs to separate each from the other in the direction of elongation forming discrete hook elements. Alternatively, using this same type extrusion process, sections of the rib structures can be milled out to form discrete hook elements. With the profile extrusion process, the basic hook cross section or profile is only limited by the die shape and hooks can be formed that extend in two directions and have hook head portions that need not taper to allow extraction from a molding surface. This is extremely advantageous in providing higher performing and more versatile hook structures. However, there is a desire to further expand the functionality of hook forming processes and to create novel hook elements with greater degrees of functionality and versatility to a variety of fibrous materials.

US 3 708 833 relates to a separable fastening device having first and second separable members wherein the first member has a surface of upstanding engaging elements extending from one broad surface of its base and the second member has a surface of complementary engaging elements extending from one broad surface of its base which are releasably interengageable with the engaging elements of the first separable member when the members are pressed into face-to-face relationship. EP 0 793 923 is directed to a synthetic resin molded surface fastener comprising a substrate sheet, a multiplicity of engaging elements and a multiplicity of head-diameter enlarging means. Therein, the multiplicity of engaging elements stand on a front surface of the substrate sheet, each of the engaging elements having a stem rising from the front surface of the substrate sheet and an engaging head continuously formed on and horizontally bulging from an upper end of the stem, the engaging head being expandable and shrinkable horizontally. Each of the head-diameter enlarging means is adapted for enlarging a diameter of the engaging head when the engaging head engages a respective one of engaging heads of a companion surface fastener.

### Brief Description of the Invention

The present invention provides a method for forming preferably a unitary polymeric hook fastener comprising a flexible backing, and a multiplicity of spaced hook elements projecting from the upper surface of the unitary backing. The hook elements each comprise a stem portion attached at one end to the backing, and a head portion at the end of the stem portion opposite the backing. The head portion projects in different directions for some adjacent hook members which adjacent hook members each have a flat face which flat faces are mutually opposing in face to face relation.

The fastener is preferably made by a novel adaptation of known methods of making hook fasteners. The preferred method generally includes extruding a thermoplastic resin through a die, forming hook elements integrally with a base or base layer. The hook elements have a top hook head portion and a generally upstanding stem portion joined to the unitary backing. The hook elements are then cut by the methods taught, for example, in U.S. Patent Nos. 3,266,113; 3,557,413; 4,001,366; 4,056,593; 4,189,809 and 4,894,060 or alternatively 6,209,177. The cut locations extend through at least the hook head portion and preferably at least a portion of the stem portion, generally from 1 to 100 percent of the stem portion, preferably 5 to 100 percent. Subsequently, stretching of the backing layer in a direction at an angle to the cuts (generally 90 to 45 degrees) separates the cut portions of the hook elements which cut portions then form spaced apart hooks. This creates two or more separated hook head members from a single hook element wherein the stem portion of the separated hook members have substantially flat mutually opposing faces.

### Brief Description of the Drawings

The present invention will be further described with reference to the accompanying drawings wherein like reference numerals refer to like parts in the several views, and wherein:
FIGURE 1 illustrates a precursor the hook fastener.
FIGURE 2 illustrates the structure of a hook fastener after it has been cut down the stem portion of at least some of the hook elements.
FIGURE 3 illustrates the Fig. 2 hook fastener after is has been stretched to separate the cut hook elements.
FIGURE 4(a) is an enlarged side view of a cut and separated hook member.
FIGURE 4(b) is an enlarged side view of the same hook member of Fig. 4(a) from the uncut side.
FIGURE 4(c) is an enlarged top view of the cut and separated hook member of Fig. 4(a).
FIGURE 5(a) is an enlarged side view of an alternative hook member prior to being cut and separated.
FIGURE 5(b) is an enlarged side view of an alternative hook member after being cut.
FIGURE 5(c) is an enlarged side view of an alternative hook member after being cut and separated.
FIGURE 6(a) is an enlarged side view of an alternative hook member prior to being cut and separated.
FIGURE 6(b) is an enlarged side view of an alternative hook member after being cut.
FIGURE 6(c) is an enlarged side view of an alternative hook member after being cut and separated.
FIGURE 7 is a schematic illustration of the method for forming a hook fastener such as shown in Figs. 1-6.
FIGURE 8 is a photomicrograph of a hook fastener such as shown in Fig. 3 engaged with a loop fabric.
FIGURE 9(a) is an enlarged side view of a cut and separated hook member that has an angled cut.
FIGURE 9(b) is an enlarged side view of the same hook member of Fig. 9(a) from the uncut side.
FIGURE 9(c) is an enlarged top view of the hook member of Fig. 9(a) after being cut and separated.
FIGURE 10(a) is an enlarged side view of a cut and separated hook member that has been double cut.
FIGURE 10(b) is an enlarged top view of the hook member of Fig. 10(a).
FIGURE 11 is a photomicrograph of a hook fastener such as shown in Fig. 9.
FIGURE 12 is a perspective view of a diaper having a large area tab.

### Detailed Description of the Preferred Embodiments

The present invention is directed to a method of forming unique hook members from a hook strip having upstanding integral hook elements. The unique hook members have a flat face and an opposing nonflat face, which flat face, is in opposing face-to-face relationship to a flat face of an adjacent hook member. The nonflat faces can be the same or different on adjacent hook members and generally at least one of the two (or more) opposing hook members has a loop engaging overhanging portion. The hook strips generally have an integral film backing formed of the same or different thermoplastic resin as the hook elements. Suitable polymeric materials from which the hook fastener portion can be made include thermoplastic resins comprising polyolefins, e.g. polypropylene and polyethylene, polyvinyl chloride, polystyrene, nylons, polyester such as polyethylene terephthalate and the like and copolymers and blends thereof. Preferably the resin is a polypropylene, polyethylene, polypropylene-polyethylene copolymer or blends thereof. The film backing is generally oriented in at least one direction and has a thickness of from 25 to 250 µm, or more preferably 50 to 150 µm. The backing of the fastener should be thick enough to allow it to be attached to a substrate by means such as sonic welding, heat bonding, sewing or adhesives, including pressure-sensitive or hot melt adhesives, and to firmly anchor the stems and provide resistance to tearing when the fastener is peeled open. However, when a fastener is used on a disposable garment, the backing should not be so thick that it is stiffer than necessary. Generally, the backing has a Gurley stiffness of 10 to 2000 as measured by TAPPI test method T543, preferably 10 to 200 so as to allow it to be perceived as soft when used either by itself or laminated to a further carrier backing structure such as a nonwoven, woven or film-type backing, which carrier backing should also be similarly soft for use in disposable absorbent articles. The optimum backing thickness will vary depending upon the resin from which the hook fastener portion is made, but will generally be between 20 µm and 1000 µm.

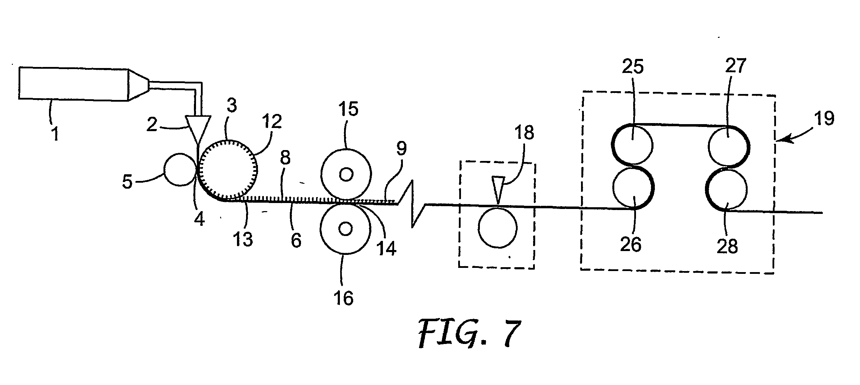

A first method such as shown in Fig. 7, of forming hook strips with a continuous film-like film backing is by extruding a semi-crystalline thermoplastic resin through a die 2 onto a continuously moving mold surface with cavities. This is generally a roll surface 3 as shown in Fig 7. The molten resin is extruded or forced into the cavities 12 by pressure, generally by use of a nip 4. In the case of Fig. 7, the nip is formed by the backup roller 5 and the roll 3 but alternatively the polymer could be nipped between a die face and roll surface or the like. The nip or gap is sufficiently wide such that a coherent film backing 13 is also formed over the cavities. The film backing preferably has a smooth surface along the back but could have a textured or rough surface. The extruded strip 6 has projections or hook elements 8 projecting from the backing 13 when the strip is removed from the mold surface. A vacuum can be used to evacuate the cavities for easier extrusion into the cavities.

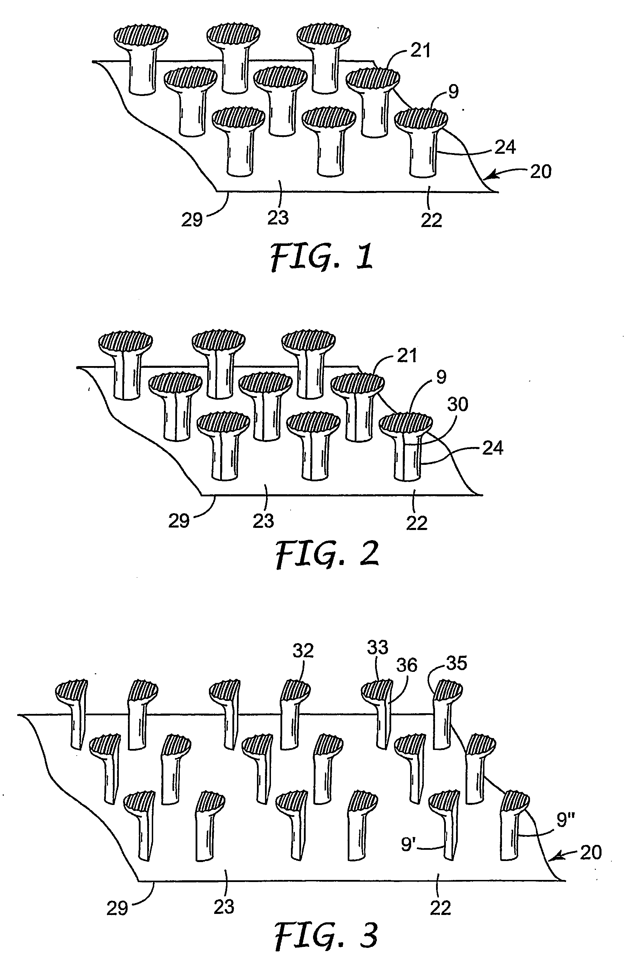

The cavities 12 could be in the shape of the final hook elements as disclosed, for example, in U.S. Patent Nos. 6,174,476 or 6,540,497. In this case, a generally continuously tapered hook is pulled from continuously tapered hook cavities in its final hook form or at least a partially formed hook element. Also, the extruded strip 6 could be a web provided with only partially formed hook elements or unformed hook elements forming projections. The tip portion of these projections (or the tips of partially formed hook elements) then could be subsequently formed into the desired finished hook elements 9. This would, in a preferred method, be done by deforming the tip portions using heat and/or pressure. The heat and pressure, if both are used, could be applied sequentially or simultaneously. In a preferred method, heat and pressure is selectively applied to the tip portion in a nip 14. In this case, there is provided a nip 14 having at least one first heated surface member 15 and at least one second opposing surface member 16. The nip has a gap which gap has a compression zone defined by a first entry gap width and a second end gap width. The first gap width is substantially equal to or less than the web first average thickness. The second end gap width is less than the first web thickness and is the smallest gap width of the nip 14. The final hook strip has formed hook heads 21 on the stems or projections 24 as shown in Fig. 1. The hook elements are then transferred to a cutting station 18 where the hook elements are cut through the hook heads and substantially through the hook stems to the backing or base layer 13. The cut hook elements are then separated into two or more hook members by stretching or orienting the backing in at least one direction in the stretching station 19.

In the specific method shown in Fig. 7, a feed stream of preselected thermoplastic resin is fed by conventional means into an extruder 1 which melts the resin and moves the heated resin to a die 2. The die 2 extrudes the resin as a ribbon of material onto a mold surface 3, e.g., a cylinder, having an array of mold cavities 12 in the form of elongated holes, which preferably taper to facilitate removal of the solidified resin from the mold cavities. These holes or mold cavities are preferably in the form of straight (i.e., only one axis in the length direction) cavities. The mold cavities can be connected to a vacuum system (not shown) to facilitate resin flow into the mold cavities. This could require a doctor blade or knife to remove excess material extruded into the interior face of the mold cylinder. The mold cavities 12 preferably terminate in the mold surface having an open end for entry of the liquid resin and a closed end. In this case, a vacuum could be used to at least partially evacuate the mold cavities 12. If the die forms the nip, the mold surface 3 preferably matches that of the die 2 where they are in contact to prevent excess resin being extruded out, e.g., the die side edges. The mold surface and cavities can be air or water cooled, or the like, prior to stripping the integrally formed backing and upstanding formed stems from the mold surface such as by a stripper roll. This provides a strip or web 6 of a backing or base 13 having integrally formed upstanding stems or hooks 8 of thermoplastic material. Alternatively, upstanding stems could be formed on a preformed backing or the like by extrusion molding or other known techniques.

The extruded strip having upstanding stems can optionally be sent through a capping station as shown in Fig. 7, wherein the heated calender roll 15 contacts a predetermined portion of a distal end of the stems 8 projecting upward from the backing 13 to form a capped head. The roll temperature will be that which will readily deform the distal ends under pressure created by the nip in the compression zone 14 without causing resin to stick to the roll 15 surface. The roll 15 surface can be treated with release coatings resistant to high temperature to allow for higher temperatures and/or longer contact times between the stem tips or distal ends and the heated roll 15.

Subsequent to the optional capping step, the extruded strip is sent through a cutting station wherein the cutter 18 cuts through at least a portion of the hook elements. The cutter 18 can cut using any conventional means such as reciprocating or rotating blades, lasers, or water jets. If cutter blades are used, they are generally spaced to make a cut every 150 to 500 µm or preferably every 150 to 300 µm. Generally, at least about 50 percent of the hook elements are cut, preferably at least 75 percent and most preferably at least 90 percent.

After cutting of the hook element, the base of the strip 6 is longitudinally stretched, at a stretching station 19, at a stretch ratio of at least 2 to 1, and preferably at a stretch ratio of about 4 to 1, e.g., between a first pair of nip rollers 25 and 26 and a second pair of nip rollers 27 and 28 driven at different surface speeds. Optionally, the strip 6 can also be transversely stretched to provide biaxial orientation to the base or backing. Roller 25 is preferably heated to heat the base prior to stretching, and the roller 27 is preferably chilled to stabilize the stretched base. Stretching causes spaces between the cut portions of the hook elements, which then become the hook fastener members. Optionally, the hook strip can be stretched prior to cutting of the hook elements to provide further molecular orientation to the polymer backing.

The hook elements and members are generally of height of from 0.1 mm to 2 mm, preferably from about 0.10 to 1.3 mm in height, and more preferably from about 0.2 to 0.5 mm in height. The hooks have a density on the backing preferably of from 25 to 500 hooks per square centimeter, and more preferably from about 200 to 500 hooks per square centimeter. With capped hooks, the stem portions have a diameter adjacent the heads of preferably from 0.05 to 0.7 mm, and more preferably from about 0.1 to 0.3 mm. The capped heads project radially past the stem portions away from the flat cut face of the hook structure preferably by, on average, about 0.01 to 0.3 mm, and more preferably by, on average, about 0.02 to 0.25 mm and have average thicknesses between their outer and inner surfaces (i.e., measured in a direction parallel to the axis of the stems) preferably from about 0.01 to 0.3 mm and more preferably from about 0.02 to 0.1 mm. The capped heads have an average diameter (i.e., measured radially of the axis of the capped heads and the stems) to average capped head thickness ratio preferably from 1.5:1 to 12:1, and more preferably from 2.5:1 to 6:1.

For most hook-and-loop uses, the hooks may be distributed substantially uniformly over the entire surface area of the hook strip, usually in a square, staggered or hexagonal array.

Referring now to, for example, Figs. 1-3, a hook fastener 20 comprises a thin strong flexible film-like backing 22 having generally parallel upper and lower major surfaces 23 and 29, and a multiplicity of spaced hook elements 9 projecting from at least the upper surface 23 of the backing 22. The backing can have planar surfaces or surface features as could be desired for tear resistance or reinforcement. The hook elements 9 each comprise a stem portion 24 attached at one end to the backing 22 and preferably having tapered sections that widen toward the backing 22 to increase the hook anchorage and breaking strengths at their junctures with the backing 22, and a head portion 21 at the end of the stem portion 24 opposite the backing 22.

The hook fastener hook elements following cutting are shown in Fig. 2 with cut lines 30. The hook element cut lines can be at any location along the stem and the stem could be cut multiple times in the same or different directions. In Fig. 3, the cut hook elements 9 have been separated into adjacent mutually opposing hook members 9'and 9". Each hook member has a flat face 36 or 35 facing an opposing adjacent hook member. The hook head has also been separated into two portions where the engaging overhang head portion has been divided so that there is no overhang on at least the one flat face 35 or 36, but overhang in at least one other direction on at least some of the hook members. At least one of the at least two opposing hook members 9' and 9", cut from a single hook element, will have an overhanging or engaging head portion. However, not necessarily all of the hook members will, or need to, have an overhanging or engaging head portion.

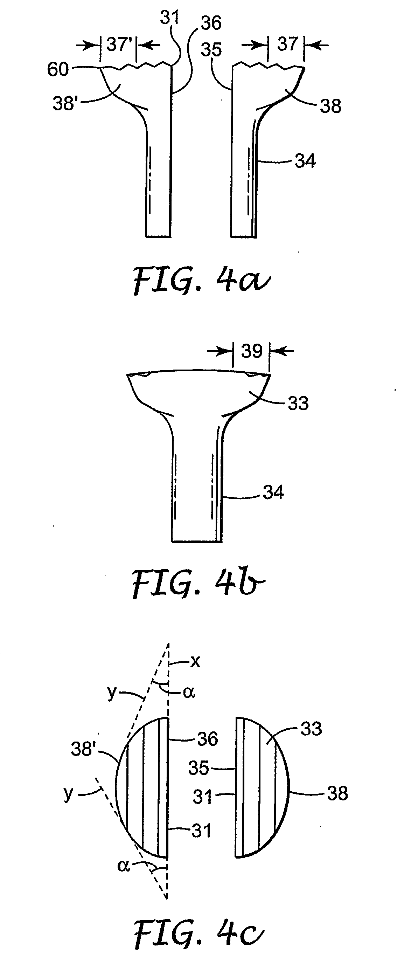

The individual hook members will have at least one flat face extending along one face of the stem portion and continuing along the head portion. The head portion of at least some of the hook members will have an overhanging portion extending beyond the stem for engaging a loop or fiber or another hook head portion. As shown in Fig. 4(a), the overhanging portion 37 preferably extends at an angle α from the flat face and extends a distance of from about 0.01 to 0.3 mm, preferably 0.02 to 0.25 mm. Tangent lines y-y drawn from a portion of the rim 60 of the overhanging portion down towards the base would not be parallel with a flat face. These tangent lines could range from perpendicular to a stem flat face or be angled at angle alpha (α) of from 90° to 1°, wherein the angle α is measured from the tangent line y-y to a reference line x-x drawn from a point on the rim parallel to the flat face. Generally, at least some of the tangent lines α will be at angles ranging from 1 to 89° or 5 to 85°. By this, it is meant that the entire overhang is not generally parallel with a flat face although some portions of the overhang could to parallel with a flat face. The hook members are generally non-rectilinear or asymmetric. Generally, the face of a given hook member opposite the flat face is not flat but rather curved or non-smooth. Some of the hook members may not have overhanging portions or only have small overhanging portions. Further, a fastener can contain both uncut hook elements and hook members in varying ratios. The percentage of cut hook members is at least about 50%, and can be at least about 90%.

Fig. 4(a) is an enlarged view of the hook members cut from a mushroom-type hook element with flat faces 35 and 36 and second faces 38, 38', with continuous overhanging rims 37, 37'. The overhang portion 37 extends radially from a preference point 31 at the upper stem portion. The side view Fig. 4(b) shows a portion of the overhang 39 substantially perpendicular to the stem flat face 35. The hook head portion 33 is seen in the top view Fig. 4(c).

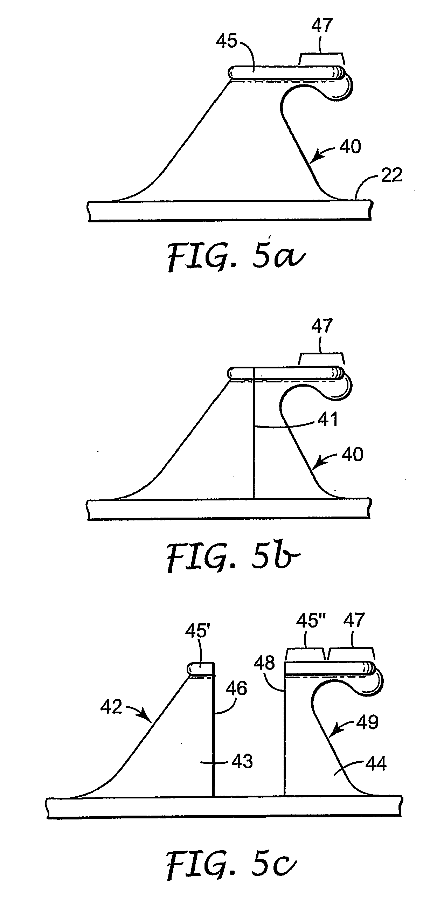

Fig. 5(a) is an enlarged hook element formed from a continuously tapered J-type hook element 40 produced by the method such as disclosed in U.S. Patent Nos. 6,174,476 and 6,540,497. The tip has also been capped in the method disclosed in Fig. 7 to give a further overhang 45. The main overhang 47 is formed in the mold cavity.

In Fig. 5(b), the cut line 41 bisects the hook element 40 which when separated as shown in Fig. 5(c) creates two flat faces 46 and 48 with two hook members 42 and 49. The hook member 42 has small overhanging portions 45' extending generally parallel to the backing 22 and generally perpendicular to flat face 46. The hook member 49 has a large overhanging portion 47 perpendicular to the stem flat face 48 and small overhangs 45" perpendicular with the flat face 48.

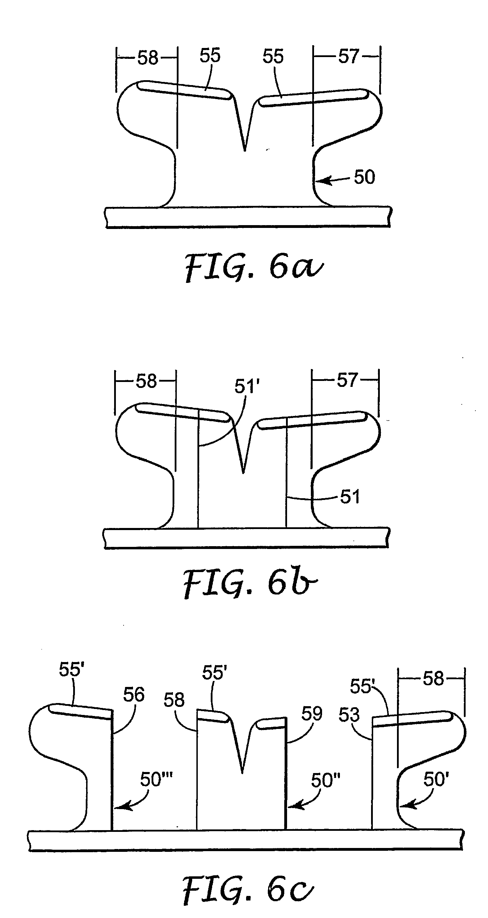

Fig. 6(a) is a different version of a continuous taper J-type hook element 50 produced by a method such as disclosed in U.S. Patent No. 5,755,015. The tip of the stem has also been capped using a method as disclosed in the Fig. 7 method to give further hook engaging overhangs 55. The main hook engaging overhangs 57 and 58 are formed in the mold cavity.

In Fig. 6(b), the cut lines 51 and 51' bisect the hook element in two locations. Then the hook element 50 is separated, as shown in Fig. 6(c), into three hook members 50', 50" and 50 " The three hook members all have at least one flat face. The hook member 50' has flat face 53 which faces flat face 59 on hook member 50". Hook member 50"' has flat face 56 which faces flat face 58 on hook member 50". All three hook members have overhanging portions 55' however hook member 50" could be a stem with no overhangs.

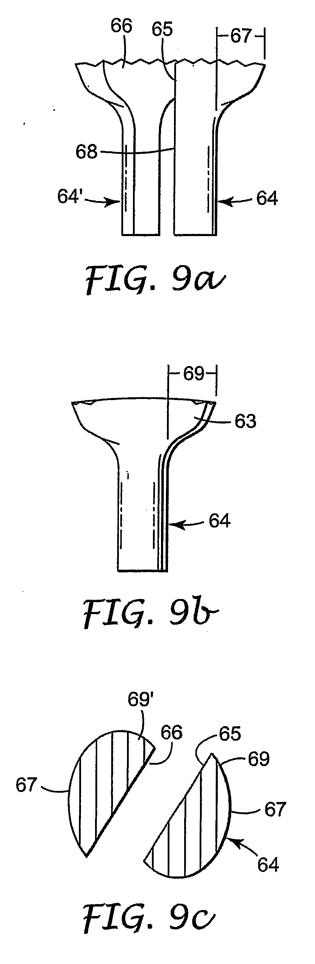

In Figs. 9(a and c), the cut line bisects the hook element at a bias which when separated, as shown in Fig. 9(a), creates two flat faces 66 an 68 with two hook members 64 and 64'. The hook members 64 and 64' have overhanging portions 69 and 69' extending radially from the flat faces 66 and 65, the same as in Fig. 4 but at an oblique angle. This produces nonsymmetrical hook members who oppose each other in face-to-face relation.

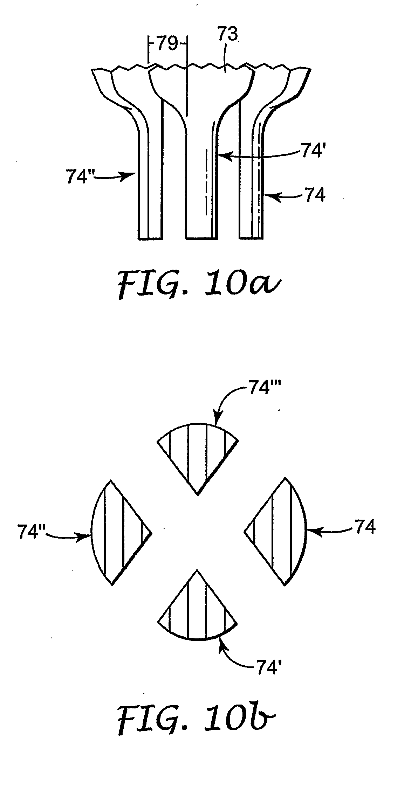

Figs. 10(a) and 10(b) are enlarged views of multiple hook members 74, 74', 74" and 74"' cut from a single mushroom-type hook element with flat faces and overhanging loop engaging portions 79. The overhang portion 79 extends radially away from the flat faces.

In certain applications, it has been discovered that very low hook densities are desirable. For example, hook densities of less than 100, preferably less than 70 and even less than 50 hooks per square centimeter are desirable when used to attach to low loft nonwovens using a relatively large area flexible hook fastener tab or patch. This low spacing has been found to increase the hooking efficiency of the individual hook elements, particularly relative to low cost and otherwise ineffective nonwoven materials not traditionally used as loop products. The hook tab or patch is also made flexible by suitable selection of the polymer forming the base layer and/or by the stretching of the base layer reducing its thickness, to a preferred range of 100 µm to 25 µm. Biaxial orientation can be used to further reduce the hook density to the desired range for a large area hook fastener.

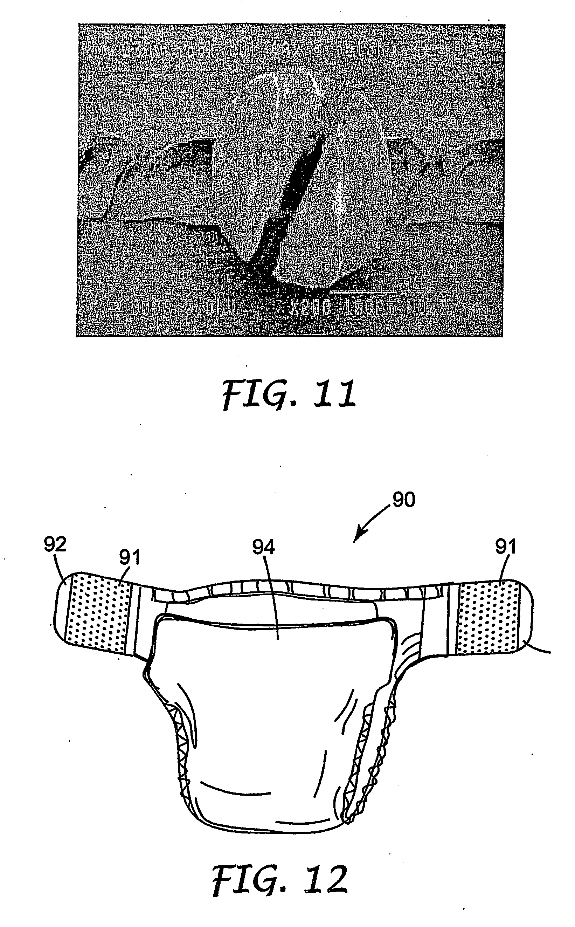

A large area fastener when used on a garment type application such as diapers, see Fig. 12, or the like provides stability between the two engaged regions. A suitable large area fastener would have a surface area of 5 to 100 cm², preferably 20 to 70 cm².

When a large area (oversized) fastener as shown in Fig. 12 is brought forward or backward for engagement with an outer surface of an article, the oversized fastener may be capable of fastening into any portion of the outer surface of the article. With this, the need for a specific attachment region or target attachment zone can be eliminated if the garment can engage at some minimum level with the fastener. The larger area also ensures secure closure due to the fasteners size. As such, large area hook fasteners of the invention could potentially eliminate the need for a separate loop component or other "mating" fastener component on the backing of the garment or article. The increased size of the large area fastener also can eliminate the need for secondary fasteners or bonded areas (such as passive bonds) that may be required to stabilize the overlapped regions of the article or garment.

Use of large area fasteners reduces the manufacturing complexity of a garment such as an absorbent article by eliminating the need for additional bond points or multiple fasteners to stabilize the fastening system of e.g., the front and rear waist regions. The addition of bond points or additional fasteners increases the complexity of the manufacturing process.

Specifically, a large area hook fastener, is capable of directly engaging an outer surface of a diaper provided with a relatively low loft nonwoven without the need for an expensive loop patch. The large area flexible hook fastener can also prevent inadvertent opening of the closure due to the large contact and attachment area creating a more stable garment closure. The oversized hook fastener could also be used in a prefastened pull-on type garment, due to its large area of contact, making the garment suitably stable for packaging and subsequent use.

### Example 1

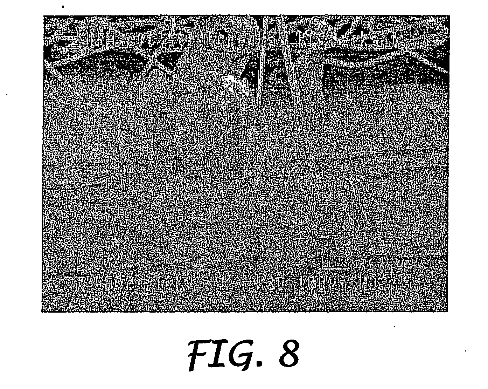

A mechanical fastener hook web (KN-2536, 3M Co., St. Paul, MN), similar to that depicted in Fig. 1, having 217 hooks per square centimeter, was advanced through a rotary cutting station. The cutting blades were arranged such that the direction of the cuts was in the cross direction of the web. The downweb (machine direction) spacing of the cuts was 254 microns. The cutting depth of the blades was set such that the individual hooks were cut down through their length to the base of the hook. The cut web was then oriented in the machine direction to further separate the cut portions of the hooks, with a KARO IV pantograph stretcher (Bruckner GmbH, Siegfred, Germany). A 115 mm by 115 mm sample was cut from the web and mounted in the stretcher. The sample was heated for 60 seconds at 150°C and then stretched at a rate of 100%/sec to a final dimension of approximately 215 mm by 115 mm resulting in a machine direction orientation of 2.0 to 1. A photomicrograph perspective view of the resulting hook web, showing the engagement of the cut hook portions with a nonwoven web, is shown in Fig. 8.

### Example 2

A mechanical fastener hook web (KN-3457, 3M Co., St. Paul, MN), similar to that depicted in Fig. 1, having 357 hooks per square centimeter, was advanced through a rotary cutting station. The cutting station and blades were arranged such that the cuts were at an angle of 23 degrees measured from the machine direction of the web. The downweb (machine direction) spacing of the cuts was 254 microns. A photomicrograph top view of one of the cut hook elements is shown in Fig. 11.

### Example 3

A mechanical fastener hook web was extruded and cut as in Example 2. The cut web was cut a second time by passing the web through the cutting station. The cutting station and blades were arranged such that the cuts were made in the machine direction of the web. This resulted in the individual hook elements being cut twice producing 4 smaller hook elements.

## Claims

1. A hook fastener (20) for use in a hook and loop fastening system comprising a thermoplastic continuous flexible film backing (22) with integral upstanding hook members (9) having stem portions (24) and head portions (21), a least some of the hook members (9) having at least one flat face (35,36) and an opposing nonflat face with at least some of the hook members (9) having overhanging portions extending beyond the stem portions (24), **characterised in that** the at least some of the hook members (9) having a flat face (35, 36) are in opposing face to face relation with the flat face (35,36) of another hook member (9) having a flat face (35,36).

2. The hook fastener of claim 1 wherein the film backing (22) is oriented in at least one direction, the film backing (22) has a thickness of from 25 to 250 µm, and the overhanging portions extend from 0.01 to 0.3 mm.

3. The hook fastener of claim 2 wherein the film backing (22) has a thickness of from 25 to 150 µm.

4. The hook fastener of any one of claims 1-3 wherein the overhanging portions extend from 0.02 to 0.2 mm.

5. The hook fastener of any one of claims 1 -4 wherein the hook members (9) have a height of from 0.1 to 2 mm.

6. The hook fastener of any one of claims 1-5 wherein the hook members (9) on the backing (22) have a density of from 25 to 500 per square centimeter.

7. The hook fastener of any one of claims 1-6 wherein at least a portion of the overhanging portion extends at an angle (α) of from 5 to 85° from a flat face (35, 36) of the hook member (9).

8. The hook fastener of any one of claims 1-7 wherein the hook fastener includes hook elements without flat faces.

9. The hook fastener of any one of claims 1-8 wherein the hook members (9) having at least one flat face comprise at least 90 percent of the hook members.

10. A method of forming a hook fastener comprising providing a hook fastener strip having a thermoplastic base layer with integral upstanding hook elements having stem portions and head portions with loop engaging overhangs, **characterised by** cutting at least some of the hook elements along the head portion and down to the stem portion substantially to the base layer and stretching the base layer so as to separate the cut hook elements into hook members each having at least one flat face, wherein the flat faces are mutually opposing in face-to-face relation.

## Patentansprüche

1. Hakenbefestiger (20) zum Gebrauch bei einem Klettverschlussbefestigungssystem, aufweisend einen kontinuierlichen, flexiblen thermoplastischen Filmträger (22) mit integralen aufrechten Hakengliedern (9) mit Stammteilen (24) und Kopfteilen (21), wobei mindestens einige der Hakenglieder (9) mindestens eine flache Fläche (35, 36) und eine gegenüberliegende nicht-flache Fläche haben, wobei mindestens einige der Hakenglieder (9) vorspringende Teile haben, die sich über die Stammteile (24) hinaus erstrecken, **dadurch gekennzeichnet, dass** sich die mindestens einigen Hakenglieder (9) mit einer flachen Fläche (35, 36) in gegenüberliegender Beziehung mit der flachen Fläche (35, 36) eines weiteren Hakenglieds (9) mit einer flachen Fläche (35, 36) befinden.

2. Hakenbefestiger nach Anspruch 1, wobei der Filmträger (22) in mindestens einer Richtung orientiert ist, wobei der Filmträger (22) eine Dicke von 25 bis 250 µm hat und sich die vorspringenden Teile von 0,01 bis 0,3 mm erstrecken.

3. Hakenbefestiger nach Anspruch 2, wobei der Filmträger (22) eine Dicke von 25 bis 150 µm hat.

4. Hakenbefestiger nach einem der Ansprüche 1-3, wobei sich die vorspringenden Teile von 0,02 bis 0,2 mm erstrecken.

5. Hakenbefestiger nach einem der Ansprüche 1-4, wobei die Hakenglieder (9) eine Höhe von 0,1 bis 2 mm haben.

6. Hakenbefestiger nach einem der Ansprüche 1-5, wobei die Hakenglieder (9) auf dem Träger (22) eine Dichte von 25 bis 500 pro Quadratzentimeter aufweisen.

7. Hakenbefestiger nach einem der Ansprüche 1-6, wobei sich mindestens ein Teil des vorspringenden Teils unter einem Winkel (α) von 5 bis 85° von einer flachen Fläche (35, 36) des Hakenglieds (9) erstreckt.

8. Hakenbefestiger nach einem der Ansprüche 1-7, wobei der Hakenbefestiger Hakenelemente ohne flache Flächen aufweist.

9. Hakenbefestiger nach einem der Ansprüche 1-8, wobei die Hakenglieder (9) mindestens eine flache Fläche haben, die mindestens 90 Prozent der Hakenglieder aufweist.

10. Verfahren zur Bildung eines Hakenbefestigers, ausweisend das Bereitstellen eines Hakenbefestigerstreifens mit einer thermoplastischen Grundschicht mit integralen aufrechten Hakenelementen, die Stammteile und Kopfteile mit in Schlaufen eingreifenden Vorsprüngen haben, **gekennzeichnet durch** das Schneiden mindestens einiger der Hakenelemente entlang des Kopfteils und den Stammteil im Wesentlichen zur Grundschicht hinunter und das Strecken der Grundschicht, um so die geschnittenen Hakenelemente zu Hakengliedern zu trennen, die jeweils mindestens eine flache Fläche haben, wobei sich die flachen Flächen in gegenüberliegender Beziehung miteinander befinden.

## Revendications

1. Fermeture à agrafes (20) à utiliser dans un système de fermeture à agrafes et boucles, comprenant un film de support thermoplastique flexible continu (22) comportant des éléments d'agrafe verticaux intégrés (9) possédant des parties de tige (24) et des parties de tête (21), au moins certains des éléments d'agrafe (9) possédant au moins une face plate (35, 36) et une face non plate opposée, au moins certains des éléments d'agrafe (9) présentant des parties en surplomb qui s'étendent au-delà des parties de tige (24), **caractérisée en ce que** lesdits au moins certains des éléments d'agrafe (9) possédant une face plate (35, 36) se trouvent dans une relation d'opposition face à face avec la face plate (35, 36) d'un autre élément d'agrafe (9) possédant une face plate (35, 36).

2. Fermeture à agrafes selon la revendication 1, dans laquelle le film de support (22) est orienté dans au moins une direction, le film de support (22) a une épaisseur comprise entre 25 µm et 250 µm, et les parties en surplomb s'étendent de 0,01 mm à 0,3 mm.

3. Fermeture à agrafes selon la revendication 2, dans laquelle le film de support (22) a une épaisseur comprise entre 25 µm et 150 µm.

4. Fermeture à agrafes selon l'une quelconque des revendications 1 à 3, dans laquelle les parties en surplomb s'étendent de 0,02 mm à 0,2 mm.

5. Fermeture à agrafes selon l'une quelconque des revendications 1 à 4, dans laquelle les éléments d'agrafe (9) ont une hauteur comprise entre 0,1 mm et 2 mm.

6. Fermeture à agrafes selon l'une quelconque des revendications 1 à 5, dans laquelle les éléments d'agrafe (9) sur le support (22) ont une densité de 25 à 500 par centimètre carré.

7. Fermeture à agrafes selon l'une quelconque des revendications 1 à 6, dans laquelle au moins une partie de la partie en surplomb s'étend à un angle (α) compris entre 5° et 85° à partir d'une face plate (35, 36) de l'élément d'agrafe (9).

8. Fermeture à agrafes selon l'une quelconque des revendications 1 à 7, dans laquelle la fermeture à agrafes comprend des éléments d'agrafe non pourvus de faces plates.

9. Fermeture à agrafes selon l'une quelconque des revendications 1 à 8, dans laquelle les éléments d'agrafe (9) qui possèdent au moins une face plate comprennent au moins 90 pour cent des éléments d'agrafe.

10. Procédé de formation d'un élément d'agrafe, comprenant la fourniture d'une bande de fermeture à agrafes comprenant une couche de base thermoplastique comportant des éléments d'agrafe verticaux intégrés possédant des parties de tige et des parties de tête présentant des surplombs d'engagement de boucle, **caractérisé par** la coupe d'au moins certains des éléments d'agrafe le long de la partie de tête et jusqu'en bas de la partie de tige sensiblement jusqu'à la couche de base et l'étirement de la couche de base de manière à séparer les éléments d'agrafe coupés en éléments d'agrafe possédant chacun au moins une face plate, dans lequel les faces plates sont mutuellement opposées dans une relation de face à face.
